# EUROPEAN PATENT APPLICATION

(11) **EP 4 797 402 A1**
(43) Date of publication of application: **26.08.2026**
(21) Application number: 24887525.4
(22) Date of filing: 09.08.2024
(51) Int. Cl.: H01M 50/209, H01M 50/242, H01M 50/264, H01M 50/249

(54) **BATTERY PACK, ELECTRIC DEVICE, AND VEHICLE**

(30) Priority: 09.11.2023 CN 202323054360 U
(71) Applicant: BYD Company Limited, Shenzhen, Guangdong 518118 (CN)
(72) Inventor: ZHANG, Chengjun, Shenzhen, Guangdong 518118 (CN); WAN, Quanyou, Shenzhen, Guangdong 518118 (CN); CAI, Chen, Shenzhen, Guangdong 518118 (CN); GONG, Xubin, Shenzhen, Guangdong 518118 (CN); ZHANG, Zhonglin, Shenzhen, Guangdong 518118 (CN)
(74) Representative: Taor, Simon Edward William
(86) International application number: PCT/CN2024/111271
(87) International publication number: WO 2025/097905

(57) **Abstract**

This application discloses a battery pack, an electric apparatus, and a vehicle. The battery pack includes a tray, a lower-layer battery set, and an upper-layer battery set. The lower-layer battery set is disposed within the tray. The upper-layer battery set is disposed above the lower-layer battery set. The upper-layer battery set includes at least one battery, and the battery has a pole. The tray has a first side beam disposed facing the pole, and the pole is located above the first side beam in a height direction of the battery pack. In this solution, a height of a pole of each battery in the upper-layer battery set is greater than a height of a side beam of the tray. If the upper-layer battery set is impacted, a pole of each battery in the upper-layer battery set is less likely to come into contact with the first side beam of the tray, which can reduce a possibility of a short circuit, arcing, or other phenomena occurring when the upper-layer battery set is impacted, and improve safety performance of the battery pack.

## Description

This application claims priority to Chinese Patent Application No. 202323054360.3, filed on November 9, 2023 and entitled "BATTERY PACK, ELECTRIC APPARATUS, AND VEHICLE", which is incorporated herein by reference in its entirety.

### TECHNICAL FIELD

This application relates to the field of battery pack technologies, and in particular, to a battery pack, an electric apparatus, and a vehicle.

### BACKGROUND

In related technologies, after a battery pack employs a multi-layer arrangement of battery sets, a tray serves as a whole to accommodate a plurality of layers of battery sets. When a side surface of the tray is impacted, a side beam of the tray facing a pole of an upper-layer battery set is impacted and deformed and comes into contact with the pole. Because the side beam is made of a metal material, a high-voltage danger such as a short circuit or arcing occurs, which affects safety of the battery pack.

### SUMMARY

An objective of this application is to provide a battery pack, an electric apparatus, and a vehicle, which improve safety performance.

According to a first aspect, this application discloses a battery pack, including:
a tray;
a lower-layer battery set disposed within the tray; and
an upper-layer battery set disposed above the lower-layer battery set, where the upper-layer battery set includes at least one battery, the battery has a pole, the tray has a first side beam disposed facing the pole, and the pole is located above the first side beam in a height direction of the battery pack.

With reference to the first aspect, in a possible implementation, the battery pack further includes:
an upper cover, where the upper cover is connected to the tray to form an accommodation space; and
the lower-layer battery set and the upper-layer battery set are both disposed within the accommodation space, the upper cover has a first side plate facing the pole, and the first side plate and the upper-layer battery set are insulated from each other.

With reference to the first aspect, in a possible implementation, the upper cover is an insulating member, or an insulating layer is disposed on a side of the upper cover facing the pole.

With reference to the first aspect, in a possible implementation, the tray includes side beams disposed in a width direction of the tray, and at least one of the side beams is the first side beam.

With reference to the first aspect, in a possible implementation, a blocking shield is disposed on at least one side of the tray in a length direction, and the blocking shield is higher than the first side beam in the height direction of the battery pack.

With reference to the first aspect, in a possible implementation, in a height direction of the tray, a height of the blocking shield is greater than or equal to a height of the first side beam and less than or equal to twice the height of the first side beam.

With reference to the first aspect, in a possible implementation, the battery pack further includes an upper cover, where the upper cover is connected to the tray to form an accommodation space, the blocking shield includes a buffer member, and the buffer member is located between the tray and the upper cover and is connected to the tray and the upper cover.

With reference to the first aspect, in a possible implementation, the buffer member has an inclined surface, and an included angle between the inclined surface and an upper end surface of the tray is greater than or equal to 135°.

With reference to the first aspect, in a possible implementation, the tray includes the first side beam, a second side beam, a third side beam, and a fourth side beam. The second side beam and the fourth side beam are spaced apart, the first side beam and the third side beam are both connected between the second side beam and the fourth side beam, and the blocking shield is disposed on a side of the second side beam facing away from the fourth side beam.

With reference to the first aspect, in a possible implementation, the blocking shield includes a fifth side beam, a sixth side beam, and a seventh side beam. The sixth side beam and the second side beam are spaced apart, the fifth side beam and the seventh side beam are spaced apart, the fifth side beam connects the sixth side beam and the first side beam, and the seventh side beam connects the sixth side beam and the third side beam.

According to a second aspect, this application discloses an electric apparatus. The electric apparatus includes the battery pack as described in the first aspect.

According to a third aspect, this application discloses a vehicle, including the battery pack as described in the first aspect.

In this solution, a height of a pole of each battery in the upper-layer battery set is greater than a height of a side beam of the tray. If the upper-layer battery set is impacted, a pole of each battery in the upper-layer battery set is less likely to come into contact with the first side beam of the tray, which can reduce a possibility of a short circuit, arcing, or other phenomena occurring when the upper-layer battery set is impacted, and improve safety performance of the battery pack.

### BRIEF DESCRIPTION OF DRAWINGS

To describe technical solutions in the embodiments of this application or in the BACKGROUND more clearly, the following describes the accompanying drawings that need to be used in the embodiments of this application or in the BACKGROUND.
FIG. 1 is a schematic exploded view of a battery pack according to an embodiment of this application;
FIG. 2 is a schematic diagram of a three-dimensional structure of a battery pack according to an embodiment of this application;
FIG. 3 is a schematic cross-sectional view of a battery pack according to an embodiment of this application;
FIG. 4 is a schematic structural diagram in which a tray is connected to a blocking shield according to an embodiment of this application; and
FIG. 5 is a schematic structural diagram of FIG. 4 from another perspective.

### Description of reference signs:

100. Tray; 110. First side beam; 120. Second side beam; 121. Notch; 130. Third side beam; 140. Fourth side beam; 150. Eighth side beam; 151. Rear-drive interface; 160. First support plate; 170. Partition beam; 200. Lower-layer battery set; 300. Upper-layer battery set; 310. pole;
400. Upper cover; 410. First side plate; 500. Blocking shield; 500a. Buffer member;
510. Fifth side beam; 520. Sixth side beam; 530. Seventh side beam; 540. Second support plate; 550. Inlet/outlet port; 560. Explosion-proof valve; 570. Front-drive interface; 580. Inclined surface; 10. Accommodation space; 20. First power distribution space; and 30. Second power distribution space.

### DESCRIPTION OF EMBODIMENTS

In order to make the objectives, technical solutions, and advantages of this application clearer, the following further describes this application in detail with reference to the accompanying drawings.

Embodiments of this application provide an electric apparatus, which may be a vehicle, a computer, a notebook computer, an electric toy, or the like. The electric apparatus includes a battery pack, which is configured to supply power to the electric apparatus.

In addition, this application provides a vehicle, including a vehicle body and any of the foregoing battery packs disposed on the vehicle body. Specifically, the vehicle may be, but is not limited to, a passenger car, a truck, or a special-purpose engineering vehicle. The vehicle body includes structures such as a frame, wheels, a transmission box, and a steering wheel. The vehicle body is provided with any of the battery packs shown above.

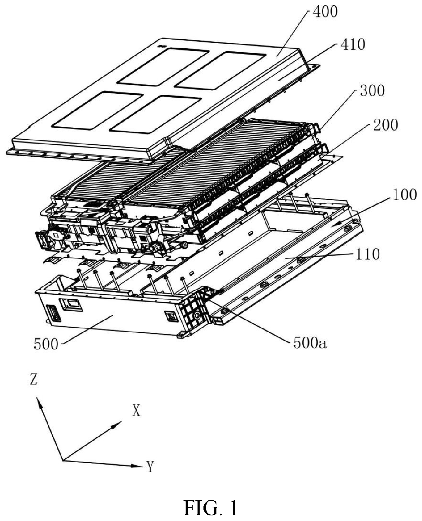

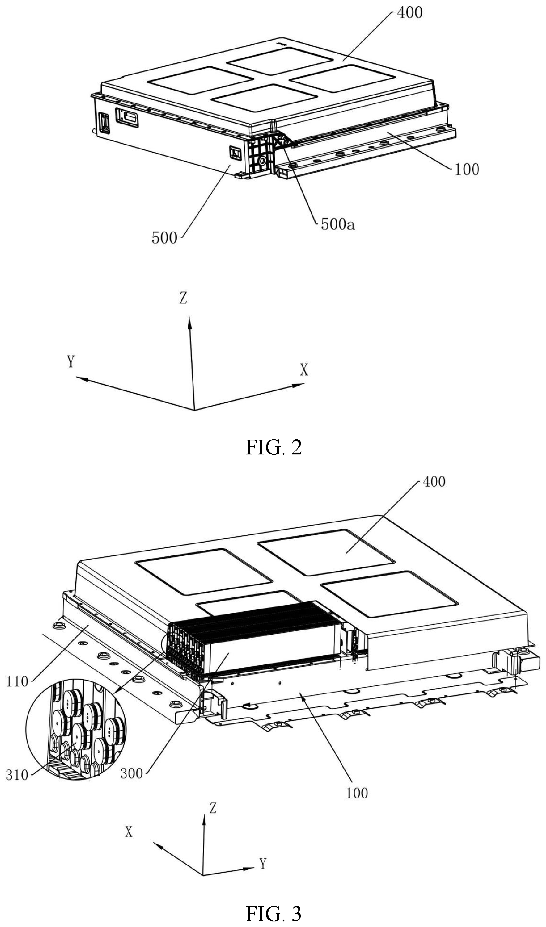

In the embodiments provided in this application, referring to FIG. 1, FIG. 2, and FIG. 3, the battery pack includes a tray 100, an upper-layer battery set 300, a lower-layer battery set 200, and an upper cover 400. The tray 100 and the upper cover 400 are connected and form an accommodation space 10. The upper-layer battery set 300 and the lower-layer battery set 200 are both accommodated in the accommodation space 10, and the upper-layer battery set 300 is supported by the lower-layer battery set 200. The tray 100 is fixed to a chassis of the vehicle, and the upper cover 400 of the battery pack can serve as a floor of the vehicle or as a part of the floor of the vehicle.

For ease of description, a length direction of the battery pack is defined as an X-axis direction, a width direction of the battery pack is defined as a Y-axis direction, and a height direction of the battery pack is defined as a Z-axis direction.

The upper-layer battery set 300 and the lower-layer battery set 200 are arranged in the Z-axis direction. The lower-layer battery set 200 is located below the upper-layer battery set 300. The battery pack has at least two layers of battery sets (the upper-layer battery set 300 and the lower-layer battery set 200), which can increase a charge capacity of the battery pack and improve endurance of an electric vehicle.

The upper-layer battery set 300 includes at least one battery, and the lower-layer battery set 200 includes at least one battery. The battery may be a thin rectangular block-shaped long battery or a slightly thick rectangular block-shaped battery. Each battery is provided with a pole, and the pole is disposed on an end surface of the battery in the Y-axis direction.

In the embodiments provided in this application, the tray 100 is provided with side beams surrounding the lower-layer battery set 200. poles of at least some batteries in the lower-layer battery set 200 face the first side beam 110 of the tray 100. A height of a pole of each battery in the upper-layer battery set 300 in the Z-axis direction is greater than a height of the first side beam 110 of the tray 100. Furthermore, poles 310 of at least some batteries in the upper-layer battery set 300 face the first side beam 110 of the tray 100. "poles of at least some batteries in the upper-layer battery set 300 face the first side beam 110 of the tray 100" means that poles 310 of at least some batteries in the upper-layer battery set 300 face a plane extending in the Z-axis direction of the first side beam 110, that is, the poles 310 and the first side beam 110 are located on a same side of the tray. It can be understood that the first side beam 110 is located on a periphery of the upper-layer battery set 300, and at least some poles 310 in the upper-layer battery set 300 face the periphery, and the height of the pole 310 of each battery in the upper-layer battery set 300 is greater than the height of the first side beam 110.

If the upper-layer battery set 300 is impacted, the pole 310 of each battery in the upper-layer battery set 300 is less likely to come into contact with a side beam of the tray 100. It should be noted that when the battery pack is applied to the vehicle, because the tray 100 is fixedly connected to the chassis of the vehicle, when the vehicle is impacted in the Y-axis direction, the deformed vehicle body structure is more likely to impact an upper part of the tray 100 in the Z-axis direction. That is, a side beam of the tray 100 facing the upper-layer battery set 300 is more likely to deform due to impact and come into contact with the pole 310 of the battery in the upper-layer battery set 300, affecting high-voltage safety. By misaligning the pole 310 of each battery in the upper-layer battery set 300 with the side beam of the tray 100, a possibility of a short circuit, arcing, or other phenomena occurring when the upper-layer battery set 300 is impacted can be reduced, and safety performance of the battery pack can be improved. The tray 100 is generally made of a metal material, and a metal tray 100 has high strength, which can protect the upper-layer battery set 300 and the lower-layer battery set 200, thereby improving impact resistance of the battery pack.

In the embodiments provided in this application, the upper-layer battery set 300 is closer to the upper cover 400 than the lower-layer battery set 200. The upper cover 400 is provided with a first side plate 410, which is disposed on a side of the upper cover 400 in the Y-axis direction. poles 310 of at least some batteries in the upper-layer battery set 300 face the first side plate 410. The upper-layer battery set 300 and the first side plate 410 are insulated from each other. Specifically, the first side plate 410 is an insulator, or a surface of the first side plate 410 facing the upper-layer battery set 300 has an insulating layer. It can be understood that when the battery pack is impacted, the impact causes the first side plate 410 to deform. If the pole 310 in the upper-layer battery set 300 comes into contact with the first side plate 410, the upper-layer battery set 300 is not short-circuited because the first side plate 410 is an insulator or the surface of the first side plate 410 facing the upper-layer battery set 300 has an insulating layer, thereby improving safety performance of the battery pack.

In the embodiments provided in this application, the upper cover 400 may be an insulating member, or the first side plate 410 of the upper cover 400 facing the pole is provided with an insulating layer. The insulating member may be made of materials such as plastic or rubber, and the insulating layer may be made of materials such as plastic or rubber. This application does not impose special limitations on materials of the insulating member or the insulating layer, provided only that the insulating member and the insulating layer have an insulating function. Specifically, the upper cover 400 includes a plurality of side plates, which are connected head-to-tail to surround the upper-layer battery set 300. At least one of the plurality of side plates is the first side plate 410, and the first side plate 410 faces the pole 310 in the upper-layer battery set 300.

In the embodiments provided in this application, a width direction of the tray 100 is the Y-axis direction. When the battery pack is applied to the vehicle, the X-axis direction is a forward or backward direction of the vehicle, and the Y-axis direction is a width direction of the vehicle. The Z-axis direction is a height direction of the vehicle. Generally, when the vehicle is traveling, front and back ends of the vehicle are more likely to impact (two ends of the vehicle in the X-axis direction). poles in the upper-layer battery set 300 and the lower-layer battery set 200 of the battery pack are disposed on end surfaces that are of respective batteries of the poles and that are in the Y-axis direction. An impact force on the battery pack comes from the X-axis direction, which has a relatively small influence on the poles in the battery pack and can also reduce probability of a short circuit occurring in the battery pack due to impact.

At least one of side beams of the tray 100 disposed in the width direction is the first side beam 110. The first side beam 110 is disposed on a side of the battery pack in the Y-axis direction. Because a height of the pole 310 in the upper-layer battery set 300 in the Z-axis direction is greater than a height of the first side beam 110, the pole 310 of the upper-layer battery set 300 is less likely to come into contact with the first side beam 110 after the battery pack is impacted, which can reduce a possibility of a short circuit or arcing occurring in the battery pack. It should be noted that the first side beam 110 is made of a metal material and has high strength, which can protect the upper-layer battery set 300 and the lower-layer battery set 200.

In the embodiments provided in this application, heights of the plurality of side beams of the tray 100 in the Z-axis direction may all be less than the height of the pole 310 in the upper-layer battery set 300. When the battery pack is impacted, there is a height difference between the pole 310 of the upper-layer battery set 300 and the plurality of side beams of the tray 100. The pole 310 of the upper-layer battery set 300 is less likely to come into contact with the side beams of the tray 100, and thus the battery pack is less prone to a short circuit or other phenomena after being impacted.

In a possible implementation, the height of only the first side beam 110 in the plurality of side beams of the tray 100 is less than the height of the pole 310 in the upper-layer battery set 300, and the pole 310 of the upper-layer battery set 300 faces the first side beam 110. When the battery pack is impacted, there is a height difference between the pole 310 of the upper-layer battery set 300 and the first side beam 110 of the tray 100. The pole 310 of the upper-layer battery set 300 is less likely to come into contact with the side beams of the tray 100, and thus the battery pack is less prone to a short circuit or other phenomena after being impacted.

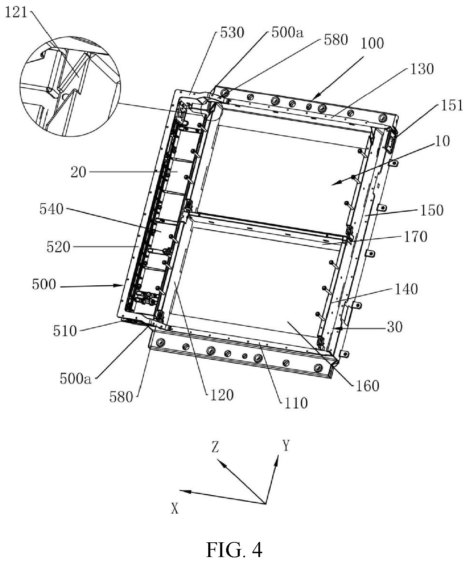

In the embodiments provided in this application, referring to FIG. 4, the plurality of side beams in the tray 100 specifically include a first support plate 160, the first side beam 110, a second side beam 120, a third side beam 130, and a fourth side beam 140. The second side beam 120 and the fourth side beam 140 are spaced apart, the first side beam 110 and the third side beam 130 are both connected between the second side beam 120 and the fourth side beam 140, and the blocking shield 500 is disposed on a side of the second side beam 120 facing away from the fourth side beam 140. The first side beam 110 and the third side beam 130 are arranged at intervals in the Y-axis direction, and the second side beam 120 and the fourth side beam 140 are arranged at intervals in the X-axis direction. Heights of the first side beam 110, the second side beam 120, the third side beam 130, and the fourth side beam 140 in the Z-axis direction may be equal or unequal. The first side beam 110, the second side beam 120, the third side beam 130, and the fourth side beam 140 are located on a same side of the first support plate 160.

In the embodiments provided in this application, the side beams in the tray 100 are hollow to form an exhaust passage, and the side beams are further provided with a plurality of exhaust ports in communication with the exhaust passage. When a battery in the battery pack experiences thermal runaway, high-pressure gas ejected from the inside of the battery can be discharged from the exhaust ports into the exhaust passage, and then discharged to the outside of the battery pack. The side beams are provided with air guide plates, which can direct the high-pressure gas ejected from the inside of the battery to be discharged to the outside of the battery pack.

In the embodiments provided in this application, the tray 100 is further provided with a partition beam 170, which connects the second side beam 120 and the fourth side beam 140. The partition beam 170 is located between the first side beam 110 and the third side beam 130, and the partition beam 170 divides the accommodation space 10 into two sub-regions. Specifically, the tray 100 can accommodate two lower-layer battery sets 200 and two upper-layer battery sets 300. The two lower-layer battery sets 200 are respectively disposed in the two sub-regions, and the two upper-layer battery sets 300 are respectively located above the two lower-layer battery sets 200.

In the embodiments provided in this application, the battery pack further includes a blocking shield 500. The blocking shield 500 is disposed on a side of the tray 100 in the X-axis direction. Specifically, the blocking shield 500 is higher than the first side beam 110 in the Z-axis direction. When the battery pack is applied to the vehicle, the blocking shield 500 is located in front of or behind the tray 100 in the X-axis direction, and the X-axis direction is a traveling direction of the vehicle. In an example in which the blocking shield 500 is disposed in front of the tray 100, when the vehicle is traveling forward and wading through water, water flow or other ground obstacles move toward the front of the tray 100. Because the blocking shield 500 is higher than the first side beam 110, a water blocking barrier can be formed in front of the first side beam 110 in the X-axis direction. The blocking shield 500 can prevent water flow from submerging the tray 100 and entering the accommodation space 10 accommodating the upper-layer battery set 300 and the lower-layer battery set 200, thereby causing the upper-layer battery set 300 and the lower-layer battery set 200 in the battery pack to malfunction. In an example in which the blocking shield 500 is disposed behind the tray 100, when the vehicle is reversing backward and wading through water, water flow or other ground obstacles move toward the back of the tray, the blocking shield 500 can prevent water flow from submerging the tray 100 and entering the accommodation space 10 in the battery pack, thereby causing a short circuit between the upper-layer battery set 300 and the lower-layer battery set 200 in the battery pack. It can be understood that, in other embodiments provided in this application, the tray 100 may further include a plurality of side beams, which together with the first side beam enclose and form the accommodation space 10, and the blocking shield 500 may be higher than at least one other side beam, or higher than all side beams of the tray.

The blocking shield 500 can further protect the tray 100. When the vehicle is traveling forward or reversing backward and collides with an obstacle, the blocking shield 500 can play a buffering role, reducing damage to the battery pack.

In the embodiments provided in this application, a quantity of blocking shields 500 may be two, with one blocking shield 500 disposed in front of the tray 100 and the other blocking shield 500 disposed behind the tray 100. Regardless of whether the vehicle is traveling forward or reversing backward, the tray 100 is located behind the blocking shield 500, and the blocking shield 500 can prevent water flow from submerging the tray 100. In the Z-axis direction (a height direction) of the tray 100, a height of the blocking shield 500 is greater than or equal to the height of the first side beam 110 and less than or equal to twice the height of the first side beam 110, so that the blocking shield 500 has a sufficient height to block the impact of water flow or obstacles. In some embodiments provided in this application, the battery pack further includes an upper cover 400. The upper cover 400 is connected to the tray 100 and the blocking shield 500 in the Z-axis direction to enclose the battery pack. A part of the upper cover 400 connected to the tray 100 is lower than a part of the upper cover 400 connected to the blocking shield 500 in the Z-axis direction, that is, the upper cover 400 has a connecting surface adapted to the tray 100 and the blocking shield 500, so that the battery pack can be tightly connected, further preventing water ingress. In some embodiments, the height of the blocking shield 500 is greater than or equal to the height of the first side beam 110 and less than or equal to twice the height of the first side beam 110. The part of the upper cover 400 connected to the tray is lower than the part of the upper cover 400 connected to the blocking shield 500. A difference in length between the two parts is also a length by which the blocking shield 500 is higher than the first side beam 110, so that a plane can be formed above the upper cover in the Z-axis direction. In some embodiments, the upper cover can serve as the vehicle floor or a part of the vehicle floor.

The blocking shield 500 includes a buffer member 500a. The buffer member 500a is located between the tray 100 and the upper cover 400, and the buffer member 500a is connected to the tray 100 and the upper cover 400. The buffer member 500a has an inclined surface 580, and an included angle between the inclined surface 580 and an upper end surface of the tray 100 in the Z-axis direction is greater than or equal to 135°.

The upper cover 400 is fixedly connected to the tray 100 and the buffer member 500a. The upper cover 400 is adapted to the inclined surface 580 structure in the buffer member 500a. When the battery pack is impacted, the upper cover 400 and the inclined surface 580 of the buffer member 500a play a buffering role, which reduces a risk of deformation of the tray 100, and helps improve safety performance of the battery pack.

Specifically, the blocking shield 500 includes a second support plate 540, a fifth side beam 510, a sixth side beam 520, and a seventh side beam 530. The sixth side beam 520 and the second side beam 120 are spaced apart, the fifth side beam 510 and the seventh side beam 530 are spaced apart, the fifth side beam 510 connects the sixth side beam 520 and the first side beam 110, and the seventh side beam 530 connects the sixth side beam 520 and the third side beam 130. The second support plate 540 is connected to the first support plate 160 in the X-axis direction. The second support plate 540, the fifth side beam 510, the sixth side beam 520, the seventh side beam 530, the second side beam 120, and the upper cover 400 enclose a first power distribution space 20. The first power distribution space 20 is configured to accommodate an electrical device, and the electrical device is electrically connected to the upper-layer battery set 300 and/or the lower-layer battery set 200. It should be noted that the second side beam 120 is provided with a notch 121. The notch 121 is in communication with the first power distribution space 20 and the accommodation space 10. The notch 121 allows wire harness to pass through, and is electrically connected to the electrical device and the upper-layer battery set 300 through the wire harness, and/or is electrically connected to the electrical device and the lower-layer battery set 200 through the wire harness.

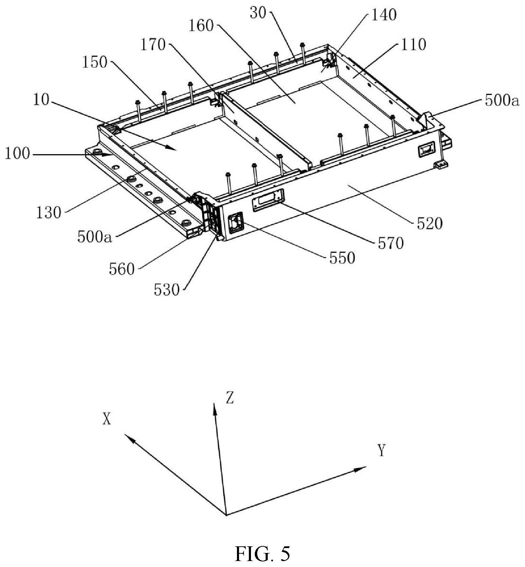

In the embodiments provided in this application, referring to FIG. 5, the blocking shield 500 can be integrally formed by die casting. The blocking shield 500 is further provided with an inlet/outlet port 550, a high-voltage connector, a low-voltage connector, and an explosion-proof valve 560. The inlet/outlet port 550 is in communication with a liquid cooling pipe, and the liquid cooling pipe circulates cooling water to cool the electrical device in the first power distribution space 20. The high-voltage connector outputs a relatively high voltage, and the low-voltage connector is configured to output a relatively low voltage. When thermal runaway occurs inside the battery pack, or a high voltage occurs in the accommodation space 10 and the first power distribution space, the explosion-proof valve 560 can be automatically opened to release pressure inside the battery pack, preventing the battery pack from exploding due to excessive internal pressure.

A height of the fifth side beam 510 in the Z-axis direction is greater than a height of the second side beam 120 in the Z-axis direction. A height of the sixth side beam 520 in the Z-axis direction is greater than the height of the second side beam 120 in the Z-axis direction. A height of the seventh side beam 530 in the Z-axis direction is greater than the height of the second side beam 120 in the Z-axis direction. A surface of the fifth side beam 510 facing away from the second support plate 540 includes a plane and an inclined surface 580. A surface of the sixth side beam 520 facing away from the second support plate 540 is a plane. A surface of the seventh side beam 530 facing away from the second support plate 540 includes a plane and an inclined surface 580. Heights of the fifth side beam 510, the sixth side beam 520, and the seventh side beam 530 in the Z-axis direction are the same, and planes of the fifth side beam 510, the sixth side beam 520, and the seventh side beam 530 are flush. The inclined surface 580 of the fifth side beam 510 connects the plane of the fifth side beam 510 and an upper end surface of the first side beam 110. An included angle between the inclined surface 580 of the fifth side beam 510 and the upper end surface of the first side beam 110 is greater than 135°. The inclined surface 580 of the seventh side beam 530 connects the plane of the seventh side beam 530 and an upper end surface of the third side beam 130. An included angle between the inclined surface 580 of the seventh side beam 530 and the upper end surface of the third side beam 130 is greater than 135°.

In the embodiments provided in this application, the blocking shield 500 and/or the tray 100 is provided with a lifting lug, which can facilitate fixing of the tray 100 to the vehicle body of the vehicle. Specifically, the battery pack can be fixed to the vehicle body through fixing bolts that run through the lifting lug and that are fixedly connected to the vehicle body. There may be a plurality of lifting lugs, and the plurality of lifting lugs are disposed on a periphery of the battery pack.

The tray 100 further includes an eighth side beam 150, which is spaced apart from the fourth side beam 140. The eighth side beam 150 is located on a side of the second side beam 120 away from the first side beam 110, and the eighth side beam 150 is connected between the first side beam 110 and the third side beam 130. The eighth side beam 150, the fourth side beam 140, the first side beam 110, the third side beam 130, and the upper cover 400 can enclose a second power distribution space 30. The eighth side beam 150 is provided with a rear-drive interface 151, which is configured to be electrically connected to a rear-drive motor. It should be noted that when the battery pack is applied to the vehicle, the vehicle can be driven by dual motors while traveling, with one motor driving two front wheels of the vehicle and the other motor driving two rear wheels of the vehicle. The motor driving the two front wheels of the vehicle is referred to as a front-drive motor, and the motor driving the two rear wheels of the vehicle is referred to as a rear-drive motor. The front-drive motor is connected to the front-drive interface 570, and the rear-drive motor is connected to the rear-drive interface 151. In the embodiments provided in this application, in order to facilitate electrical connection of the front-drive motor and the rear-drive motor with the battery pack, the front-drive interface 570 of the battery pack is disposed on the blocking shield 500 located in front of the tray 100, and the rear-drive interface is disposed behind the tray 100.

It should be noted that all directional indications (for example, up, down, left, right, front, back, and the like) in the embodiments of this application are used merely to explain relative positional relationships, motion conditions, and the like between components in a specific posture (as shown in the accompanying drawings); and if the specific posture changes, the directional indications change accordingly.

In addition, descriptions of "first", "second", and the like involved in this application are used for a descriptive purpose only and should not be construed as indicating or implying relative importance thereof or implicitly indicating the quantity of the indicated technical features. Therefore, a feature defined with "first" and "second" may explicitly or implicitly include at least one of these features. In the description of this application, "a plurality of" means at least two, for example, two or three, unless otherwise clearly and specifically defined.

In this application, unless otherwise clearly specified and defined, terms such as "connection" and "fixation" should be understood in a broad sense. For example, the "fixation" may be a fixed connection, a detachable connection, or an integrated connection; it may be a mechanical connection or an electrical connection; it may be a direct connection, an indirect connection through an intermediate medium, or an internal communication of two elements or an interaction relationship between two elements, unless otherwise clearly defined. A person of ordinary skill in the art may understand specific meanings of the foregoing terms in this application based on specific situations.

Furthermore, the technical solutions of the embodiments of this application can be combined with each other, but any combination should be on the basis that the combination can be implemented by a person of ordinary skill in the art. When a combination of the technical solutions is contradictory or cannot be implemented, it should be considered that such a combination of the technical solutions does not exist and is not within the protection scope claimed in this application.

The foregoing descriptions are merely specific implementations of this application, but the protection scope of this application is not limited thereto. Any variation or replacement readily figured out by a person skilled in the art within the technical scope disclosed in this application shall fall within the protection scope of this application. Therefore, the protection scope of this application shall be subject to the protection scope of the claims.

## Claims

1. A battery pack, comprising:
a tray (100);
a lower-layer battery set (200) disposed within the tray (100); and
an upper-layer battery set (300) disposed above the lower-layer battery set (200), wherein the upper-layer battery set (300) comprises at least one battery, the battery has a pole (310), the tray (100) has a first side beam (110) disposed facing the pole (310), and the pole (310) is located above the first side beam (110) in a height direction of the battery pack.

2. The battery pack according to claim 1, further comprising:
an upper cover (400), wherein the upper cover (400) is connected to the tray (100) to form an accommodation space (10); and
the lower-layer battery set (200) and the upper-layer battery set (300) are both disposed within the accommodation space (10), the upper cover (400) has a first side plate (410) facing the pole (310), and the first side plate (410) and the upper-layer battery set (300) are insulated from each other.

3. The battery pack according to claim 2, wherein the upper cover (400) is an insulating member, or an insulating layer is disposed on a side of the upper cover (400) facing the pole (310).

4. The battery pack according to claim 2, wherein the tray (100) comprises side beams disposed in a width direction of the tray (100), and at least one of the side beams is the first side beam (110).

5. The battery pack according to claim 1, wherein a blocking shield (500) is disposed on at least one side of the tray (100) in a length direction, and the blocking shield (500) is higher than the first side beam (110) in the height direction of the battery pack.

6. The battery pack according to claim 5, wherein in a height direction of the tray (100), a height of the blocking shield (500) is greater than or equal to a height of the first side beam (110) and less than or equal to twice the height of the first side beam (110).

7. The battery pack according to claim 5, wherein the battery pack further comprises an upper cover (400), the upper cover (400) is connected to the tray (100) to form an accommodation space (10), the blocking shield (500) comprises a buffer member (500a), and the buffer member (500a) is located between the tray (100) and the upper cover (400) and is connected to the tray (100) and the upper cover (400).

8. The battery pack according to claim 7, wherein the buffer member (500a) has an inclined surface (580), and an included angle between the inclined surface (580) and an upper end surface of the tray (100) is greater than or equal to 135°.

9. The battery pack according to claim 5, wherein the tray (100) comprises the first side beam (110), a second side beam (120), a third side beam (130), and a fourth side beam (140); and the second side beam (120) and the fourth side beam (140) are spaced apart, the first side beam (110) and the third side beam (130) are both connected between the second side beam (120) and the fourth side beam (140), and the blocking shield (500) is disposed on a side of the second side beam (120) facing away from the fourth side beam (140).

10. The battery pack according to claim 9, wherein the blocking shield (500) comprises a fifth side beam (510), a sixth side beam (520), and a seventh side beam (530); and the sixth side beam (520) and the second side beam (120) are spaced apart, the fifth side beam (510) and the seventh side beam (530) are spaced apart, the fifth side beam (510) connects the sixth side beam (520) and the first side beam (110), and the seventh side beam (530) connects the sixth side beam (520) and the third side beam (130).

11. An electric apparatus, wherein the electric apparatus comprises the battery pack according to any one of claims 1 to 10.

12. A vehicle, comprising the battery pack according to any one of claims 1 to 10.
